# EUROPÄISCHE PATENTSCHRIFT

(11) **EP 1 285 190 B1**
(45) Veröffentlichungstag und Bekanntmachung des Hinweises auf die Patenterteilung: **03.05.2006**
(21) Anmeldenummer: 01936393.6
(22) Anmeldetag: 23.05.2001
(51) Int. Cl.: F16L 19/10

(54) **SCHNELLVERBINDER FÜR RÖHRENARTIGE LEITUNGEN**
RAPID CONNECTOR FOR TUBULAR CONDUITS
RACCORD RAPIDE POUR CONDUITES TUBULAIRES

(30) Priorität: 27.05.2000 DE 10026464
(43) Veröffentlichungstag der Anmeldung: 26.02.2003
(73) Patentinhaber: Eisele Pneumatics GmbH, 71332 Waiblingen (DE)
(72) Erfinder: Biermann, Martin, 71334 Waiblingen (DE)
(74) Vertreter: Crazzolara, Helmut
(86) Internationale Anmeldenummer: PCT/EP2001/005941
(87) Internationale Veröffentlichungsnummer: WO 2001/092772

(56) Entgegenhaltungen:
- DE-A- 3 902 642
- DE-U- 8 506 695
- FR-A- 1 408 909
- US-A- 2 761 704
- US-A- 3 858 913

## Beschreibung

Die Erfindung betrifft ein System aufweisend eine mindestens teilweise elastisch verformbare röhrenartige Leitung und eine Vorrichtung zum Verbinden mit einem Ende der Leitung, insbesondere einen Schlauch-Schnellverbinder, gemäß dem Oberbegriff des Anspruchs 1.

Aus der DE 39 02 642 A1 ist eine gattungsgemäße Vorrichtung zum lösbaren Anschließen einer Leitung, insbesondere eines Kunststoffrohres, bekannt, mit einem eine durch einen rechtwinkligen Absatz gebildete Anlage für eine Stirnfläche des röhrenartigen Leitung aufweisenden Anschlussstück und einer Klemmmittel zum Klemmen der röhrenartigen Leitung aufweisenden Betätigungseinrichtung, die beim verbindenden Betätigen gegenüber dem Anschlussstück bewegbar ist. Bei der bekannten Vorrichtung wird die röhrenartige Leitung zunächst in eine Aufnahme des Anschlussstücks eingeschoben und zwar so weit, dass eine Stirnfläche des Endes der röhrenartigen Leitung an dem rechtwinkligen Absatz in Anlage ist. Anschließend wird durch Drehen einer Drehhülse ein Eingreifen von Klemmmitteln in die röhrenartige Leitung bewirkt und diese dadurch fixiert. Der sich an den rechtwinkligen Absatz anschließende Durchtrittskanal des Anschlussstücks weist dabei einen größeren Innendurchmesser auf als der Innendurchmesser der röhrenartigen Leitung, wodurch an der Übergangsstelle ein rechtwinkliger Absatz gebildet ist. Zur Abdichtung ist ein Dichtring in eine ringförmige Schulter des Anschlussstücks eingelegt, der an der Außenseite der röhrenartigen Leitung in Anlage ist.

Die DE 85 06 695 U1 zeigt eine Verbindungs- oder Anschlußvorrichtung mit einem Anschlußstück und einer zwischen einem Verbindungsteil oder Drehhülse und einer Spannzange oder Klemmmittel angeordneten Dichtmuffe, die einen Außenkonus ausbildet, der mit einem Innenkonus des Verbindungsteils derart zusammenwirkt, dass eine von der Dichtmuffe ausgebildete und nach innen gerichtete Dichtlippe in dichtende Anlage an die Außenfläche der Leitung bringbar ist.

Die US 3,858,913 zeigt eine Fluid-Steckverbindungseinrichtung, bei der die Dichtung zwischen der röhrenartigen Leitung und dem weiblichem Steckverbindungsteil durch eine von dem Steckverbindungsteil ausgebildete Rippe bereitgestellt wird, die von dem stirnseitigen Ende der röhrenartigen Leitung beabstandet an deren äußere Umfangsfläche dichtend anliegt.

Die DE 36 10 427 C1 zeigt eine Schneid-/Klemmringverbindung, bei der ein Schneid-/Klemmring während einer Vormontage auf ein metallisches Rohr aufgepreßt wird, dabei in die Außenumfangsfläche des Rohres einschneidet und dadurch klemmend an dem Rohr unlösbar festgelegt wird. Der Schneid-/Klemmring bildet einen Außenkonus aus, der im Verlauf der Endmontage in dichtende Anlage an einen korrespondierenden Innenkonus des Anschlußstücks gebracht wird. Die Dichtung der Verbindung erfolgt durch das Zusammenwirken der Konusse des Schneid-/Klemmringes und des Anschlußstückes.

Auch die US 2,761,704 und die FR 7,408,909 A zeigen solche gattungsfremden Schneid-/Klemmring-Verbindungsvorrichtungen, bei denen ein Schneid /Klemmring unter plastischer Verformung der röhrenartigen Leitung eine dichte Verbindung zwischen Außenumfangsfläche der Leitung, Schneid-/Klemmring und Anschlußstück bereitstellt.

Der Erfindung liegt das Problem zugrunde, ein System bereitzustellen, das gegenüber den bekannten Systemen verbessert ist, insbesondere hohen Dichtheitsanforderungen genügt, eine totraumfreie Verbindung der röhrenartigen Leitung mit der Vorrichtung gewährleistet und dabei kostengünstig herstellbar und einfach zu montieren ist sowie eine geringe Baugröße, insbesondere in radialer Richtung, aufweist.

Das Problem ist durch das im Anspruch 1 bestimmte System gelöst. Besondere Ausführungsarten der Erfindung sind in den Unteransprüchen bestimmt.

Dadurch, dass durch die Klemmmittel beim verbindenden Betätigen die röhrenartige Leitung axial in Richtung auf das Anschlussstück zubewegbar ist und dabei die Stirnfläche des Endes der röhrenartigen Leitung dicht und totraumfrei an die Anlage des Anschlussstücks bringbar und mit axialer Vorspannung haltbar ist, ist eine dauerhaft dichte Verbindung gewährleistet. Dies gilt insbesondere bei einer mindestens teilweise elastisch verformbaren röhrenartigen Leitung bzw. einem Schlauch aus Kunststoff, beispielsweise Polyethylen (PE), Polyurethan (PU), Polyamid (PA) oder Polytetrafluorethylen (PTFE). Durch die axiale Vorspannung wird die Stirnfläche an die Anlage angepresst, so dass keine Toträume bildenden Spalte auftreten können. Dies gilt insbesondere dann, wenn die Stirnfläche der röhrenartigen Leitung rotationssymmetrisch ausgebildet ist, wobei die Symmetrieachse parallel und insbesondere deckungsgleich mit der Längsachse der Vorrichtung bzw. des Anschlussstücks ist. Für viele Anwendungsfälle ist es insbesondere günstig, wenn die von der Stirnfläche gebildete Ebene mit der Längsachse einen rechten Winkel einschließt.

Durch das Anpressen ist die Dichtheit auch für den Fall gewährleistet, dass sich die röhrenartige Leitung unter der Wirkung des in der Leitung herrschenden Systemdrucks, insbesondere im Bereich ihres Endstücks, verformt oder sogar fließt. Die Betätigungseinrichtung kann bei einem verbindenden Betätigen gegenüber dem Anschlussstück gedreht werden, wobei beispielsweise mittels eines Gewindes oder einer Führungsbahn die Drehbewegung auch eine Axialbewegung bewirkt. Vorzugsweise wird die Betätigungseinrichtung um einen vorgebbaren Drehwinkel und/oder mit einem vorgebbaren Drehmoment betätigt, wodurch gewährleistet ist, dass die röhrenartige Leitung dicht und totraumfrei an der Anlage angepresst ist. In der Regel wird von den Klemmmitteln nur die axiale Komponente der kombinierten Dreh-/Axialbewegung der Betätigungseinrichtung ausgeführt. Die Axialbewegung der Klemmmittel kann darüber hinaus durch zusammenwirkende Flächen der Klemmmittel und des Anschlussstücks und/oder einer Drehhülse der Betätigungseinrichtung auch eine gleichzeitige Radialbewegung hervorrufen, durch die sich die Klemmmittel in der röhrenartigen Leitung festkrallen und diese mitnehmen.

Dadurch, dass das Anschlussstück eine Aufnahme für die röhrenartige Leitung aufweist, dass die Aufnahme in Richtung auf das der röhrenartigen Leitung abgewandte Ende unter Bildung der Anlage in einen Durchtrittskanal übergeht, und dass die Anlage in ihrer radialen Ausdehnung an die röhrenartige Leitung derart angepasst ist, dass im verbundenen Zustand der Übergang zwischen einer Innenfläche der röhrenartigen Leitung und dem Anschlussstück absatzfrei ist, sind Toträume bildende Unstetigkeiten in der Kontur des Übergangs vermieden. Derartige Toträume setzen die Effizienz von Reinigungs- oder Spülvorgängen herab bzw. erhöhen die erforderlichen Reinigungs- bzw. Spülzeiten. Dies ist insbesondere bei einem erforderlichen Farbwechsel in automatisierten Lackierungsanlagen beispielsweise der Kraftfahrzeugindustrie von besonderer Bedeutung. Die Anpassung der radialen Ausdehnung der Anlage erfolgt unter Berücksichtigung des Innen- und Außendurchmessers bzw. der Wandstärke der röhrenartigen Leitung, gegebenenfalls unter Berücksichtigung ihrer Verformung unter Einwirkung des Systemdrucks. Im Betriebszustand soll der Innendurchmesser der Anlage bzw. des sich daran anschließenden Abschnitts des Anschlussstücks mit dem Innendurchmesser der gegebenenfalls unter Druck stehenden röhrenartigen Leitung vorzugsweise im Wesentlichen übereinstimmen.

Dadurch, dass die Aufnahme einen zylindrischen Abschnitt aufweist, an den sich ein nach innen vorstehender ringförmiger Steg anschließt, an den eine Außenfläche der röhrenartigen Leitung in dichtende Anlage bringbar ist, ist die Abdichtung der Verbindungsvorrichtung zusätzlich erhöht. Der Steg ist vorzugsweise einstückig von dem Anschlussstück ausgebildet und seine Ausdehnung in axialer und/oder radialer Richtung ist an die mechanischen Eigenschaften und/oder den Systemdruck angepasst. Auch die Kontur des Stegs im Querschnitt kann an den jeweiligen Anwendungsfall angepasst sein und insbesondere dreieckförmig, vorzugsweise mit stumpfem Winkel zwischen 90 und 180°, oder wulstförmig sein.

Dadurch, dass die Anlage für die Stirnfläche durch eine ringförmige Schulter gebildet ist und dass zwischen einem zylindrischen Abschnitt und der Schulter die Aufnahme einen konischen Abschnitt aufweist, erfolgt zusätzlich zu der axialen Anpressung auch eine Anpressung des Endstücks der röhrenartigen Leitung in radialer Richtung. Dies ist insbesondere bei zum Kaltfließen neigenden Werkstoffen vorteilhaft, wie beispielsweise Polytetrafluorethylen (PTFE). Vorzugsweise bildet der konische Abschnitt einen Innenkonus mit einem Konuswinkel zwischen 1 und 10°, insbesondere etwa 5°. Dadurch bildet der Übergang von dem zylindrischen zum konischen Abschnitt auch einen Anschlag beim manuellen Einführen der röhrenartigen Leitung in das Anschlussstück. Die axiale Erstreckung des konischen Abschnitts ist dabei in der Regel geringer als oder gleich der Wandstärke der röhrenartigen Leitung. Die von der ringförmigen Schulter gebildete Anlage schließt mit der Längsachse der Vorrichtung, die eine Symmetrieachse der Vorrichtung bilden kann, einen rechten Winkel ein oder einen Winkel, der um den Betrag des Konuswinkels geringer als 90° ist.

Dadurch, dass der Übergang zwischen Anlage und dem Durchtrittskanal einen weiteren konischen Abschnitt aufweist, ist ein totraumfreier Übergang zum Durchtrittskanal gewährleistet. Der Durchtrittskanal weist in der Regel einen geringeren Durchmesser als die Aufnahme des Anschlussstücks auf.

Dadurch, dass die Betätigungseinrichtung eine Drehhülse aufweist, die mittels eines zweigängigen Gewindes mit dem Anschlussstück verschraubbar ist, ist es möglich, mit geringer Tiefe des Gewindegangs und dadurch erreichbarer geringer radialer Baugröße der Vorrichtung eine zuverlässige Verbindung bereits mit kleinem Drehwinkel für die Drehhülse, beispielsweise 270°, zu erreichen. In Anwendungsfällen, in denen die radiale Baugröße nicht wesentlich ist, kann anstelle des zweigängigen Gewindes auch ein eingängiges Gewinde mit entsprechend großer Steigung eingesetzt werden.

Dadurch, dass die Drehhülse auf ihrer Innenseite eine ringförmige Schulter zum Erfassen des Klemmmittels aufweist, ist mit einfachen konstruktiven Mitteln eine Übertragung der aus der Drehbewegung der Drehhülse abgeleiteten Axialbewegung auf die Klemmmittel realisiert.

Dadurch, dass das Klemmmittel kreisumfänglich angeordnete und axial ausgerichtete Zungen aufweist, die jeweils an einem Ende über einen Verbindungsring miteinander verbunden sind und jeweils an ihrem anderen Ende eine Klemmbacke aufweisen, die eine in die röhrenartige Leitung eingreifende Klemmkante ausbildet, ist vorteilhaft eine gleichmäßige Einleitung der Klemmkraft gewährleistet. Die Zungen sind zusammen mit den zugehörigen Klemmbacken in radialer Richtung federnd auslenkbar.

Dadurch, dass die Außenseite des durch die Klemmbacke gebildeten Endes der Klemmmittel die Form eines Außenkonus hat, der beim verbindenden Betätigen mit einem von dem Anschlussstück ausgebildeten Innenkonus zusammenwirkt, wird die Axialbewegung der Klemmmittel in konstruktiv einfach zu realisierender Weise in eine radiale und dadurch die Klemmung der röhrenartigen Leitung bewirkende Bewegung umgesetzt. Durch den Konuswinkel, der beispielsweise zwischen 10 und 20° betragen kann, ist die bei gegebenem Drehmoment zu erzielende Klemmkraft bestimmt.

Weitere Vorteile, Merkmale und Einzelheiten der Erfindung ergeben sich aus den Unteransprüchen sowie der nachfolgenden Beschreibung, in der unter Bezugnahme auf die Zeichnung ein Ausführungsbeispiel im Einzelnen beschrieben ist.

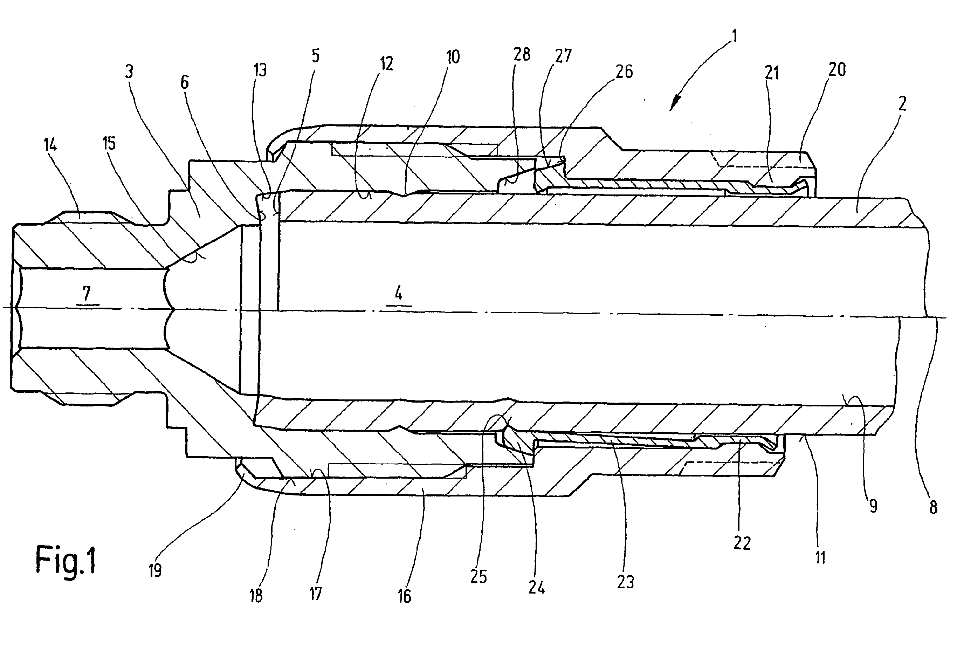

- Fig. 1: zeigt ein erfindungsgemäßes System im Längsschnitt

Die Fig. 1 zeigt ein erfindungsgemäßes System mit einer Vorrichtung zum Verbinden mit einem Ende einer röhrenartigen Leitung 2, insbesondere einen Schlauch-Schnellverbinder 1. Die Vorrichtung weist ein eine Anlage 6 für eine Stirnfläche 5 des Endes der röhrenartigen Leitung 2, bei der es sich beispielsweise um einen Kunststoffschlauch handeln kann, ausbildendes

Anschlussstück 3 auf und eine Klemmmittel zum Klemmen der röhrenartigen Leitung 2 aufweisende Betätigungseinrichtung, die beim verbindenden Betätigen gegenüber dem Anschlussstück 3 bewegbar ist. In der oberen Bildhälfte ist der Zustand dargestellt, in dem die röhrenartige Leitung 2 in die im Wesentlichen zylindrische Aufnahme 4 des Anschlussstücks 3 eingeführt ist, aber noch nicht geklemmt bzw. verbunden ist. In diesem Zustand weist die Stirnfläche 5 der röhrenartigen Leitung 2 einen Abstand von der Anlage 6 des Anschlussstücks 3 auf.

In der unteren Bildhälfte ist der geklemmte bzw. verbundene Zustand dargestellt. Durch das Klemmmittel ist die röhrenartige Leitung 2 beim verbindenden Betätigen axial in Richtung auf das Anschlussstück 3 zubewegt und dabei die Stirnfläche 5 des Endes der röhrenartigen Leitung 2 dicht und totraumfrei an die Anlage 6 des Anschlussstücks 3 gebracht und mit axialer Vorspannung gehalten. Die Aufnahme 4 geht dabei in Richtung auf das der röhrenartigen Leitung 2 abgewandte Ende unter Bildung der Anlage 6 in einen Durchtrittskanal 7 über, wobei die Anlage 6 in ihrer radialen Ausdehnung in Bezug auf die Längsachse 8 an die röhrenartige Leitung 2 derart angepasst ist, dass im verbundenen Zustand der Übergang zwischen einer Innenfläche 9 der röhrenartigen Leitung 2 und dem Anschlussstück 3 absatzfrei ist.

Die Aufnahme 4 weist mindestens einen zylindrischen Abschnitt auf, an den sich ein nach innen vorstehender ringförmiger Steg 10 anschließt, an den eine Außenfläche 11 der röhrenartigen Leitung 2 in dichte Anlage bringbar ist. Die Anlage 6 für die Stirnfläche 5 ist durch eine ringförmige Schulter gebildet, wobei zwischen der Anlage 6 und einem zylindrischen Abschnitt 12 der Aufnahme 4 ein einen Innenkonus 13 bildender Abschnitt angeordnet ist, der mit der Längsachse 8 einen Winkel von etwa 5° einschließt. Der Übergang zwischen dem zylindrischen Abschnitt 12 und dem Innenkonus 13 bildet ein Hindernis beim Einführen der röhrenartigen Leitung 2 in die Aufnahme 4. Durch die axiale Erstreckung des Innenkonus 13, die mechanischen Eigenschaften des Werkstoffes der röhrenartigen Leitung 2 und den Winkel des Innenkonus 13 ist bei vorgegebener Einführkraft der Abstand zwischen der Stirnfläche 5 und der Anlage 6 bestimmt. Der Innenkonus 13 wirkt auch als Dichtkonus, ohne dass hierfür separate Dichtmittel erforderlich sind. Das Einführen der röhrenartigen Leitung 2 erfolgt in der Regel derart, dass die Stirnfläche 5 mindestens ein Stück weit in den Bereich des Innenkonus 13 einführbar ist. Hinsichtlich der Dichtwirkung sollte die röhrenartige Leitung 2 so weit wie möglich in den Innenkonus 13 hineingeschoben werden, jedenfalls über den Übergang zwischen dem zylindrischen Abschnitt 12 und dem Innenkonus 13 hinaus, um beim anschließenden Verdrehen der Betätigungseinrichtung, beispielsweise mit einem vorgebbaren Drehmoment oder einem vorgebbaren Drehwinkel, ein sicheres Anpressen der Stirnfläche 5 an der Anlage 6 zu gewährleisten.

Das Anschlussstück 3 weist an seinem der röhrenartigen Leitung 2 abgewandten Ende ein Außengewinde 14 auf, mittels dem die Vorrichtung beispielsweise an einer Schottwand oder an einem weiteren Verbindungselement festlegbar ist. Alternativ hierzu kann das Anschlussstück 3 auch einen Einpresszapfen aufweisen, der mit der Schottwand oder dergleichen verpressbar ist. Der Durchtrittskanal 7 weist eine Innenfläche auf, die einen Werkzeugangriff erlaubt, beispielsweise einen Innensechskant. Der Übergang vom Durchtrittskanal 7 zur Aufnahme 4 erfolgt über einen weiteren konischen Abschnitt 15, der eine Anpassung des Innendurchmessers an den Innendurchmesser der röhrenartigen Leitung 2 an ihrem stirnseitigen Ende bewirkt. Zwischen dem weiteren konischen Abschnitt 15 und der Aufnahme 4 ist im gezeigten Ausführungsbeispiel noch ein zylindrischer Abschnitt mit verhältnismäßig kurzer axialer Erstreckung angeordnet, der den Innendurchmesser am stirnseitigen Ende der röhrenartigen Leitung 2 ein Stück weit fortführt. Dadurch ist insbesondere die gratfreie Herstellung des Übergangs von der Anlage 6 zum weiteren konischen Abschnitt 15 vereinfacht. Wie aus der unteren Bildhälfte entnehmbar ist, ist der Übergang zwischen dem Anschlussstück 3 und der röhrenartigen Leitung 2 absatzfrei, insbesondere ist die sich am Übergang ergebende Kontur durch eine im mathematischen Sinne stetig verlaufende Kurve zu beschreiben.

Als Werkstoff für das Anschlussstück 3 kann es je nach Anwendungsfall vorteilhaft sein, einen hoch legierten Stahl einzusetzen. Die weiteren Elemente der Vorrichtung können gegebenenfalls aus einem weniger widerstandsfähigen Werkstoff hergestellt sein, beispielsweise aus Messing. Vorzugsweise sind diese weiteren Elemente dann mit einer Oberflächenschicht, beispielsweise aus Nickel, zu versehen, wobei es sich als besonders vorteilhaft herausgestellt hat, kein galvanisches Beschichtungsverfahren zu verwenden, sondern aus Gründen einer gleichmäßigeren Beschichtung ein chemisches Beschichtungsverfahren einzusetzen.

In einem von einer Drehhülse 16 übergriffenen Abschnitt mit gegenüber den anschließenden Abschnitten größerem Außendurchmesser weist das Anschlussstück 3 ein zweigängiges Außengewinde 18 mit geringer radialer Eindringtiefe des Gewindeganges auf, das mit einem entsprechenden Innengewinde 17 der Drehhülse 16 zusammenwirkt.

Ein Endabschnitt 19 der Drehhülse 16 hintergreift, beispielsweise durch Umbördeln, den das Außengewinde 18 tragenden Abschnitt des Anschlussstücks 3, wodurch die Drehhülse 16 in Form einer Überwurfmutter, aber unverlierbar an dem Anschlussstück 3 angeordnet ist. An ihrem dem Anschlussstück 3 abgewandten Ende weist die Drehhülse 16 einen Außensechskant 20 auf, der die Betätigung der Vorrichtung bei Bedarf auch mittels eines Werkzeuges zulässt. An diesem Ende weist die Drehhülse 16 außerdem einen nach innen vorspringenden ringförmigen Steg 21 auf, um den herum ein Verbindungsring 22 der Klemmmittel derart gebogen ist, dass die Klemmmittel mindestens bei einer Axialbewegung von der Drehhülse 16 mitgenommen werden, und zwar in beiden Richtungen. Die Klemmmittel umfassen weiterhin kreisumfänglich vorzugsweise gleich verteilt angeordnete und axial ausgerichtete federnde Zungen 23, die jeweils an einem Ende über den Verbindungsring 22 miteinander verbunden sind und jeweils an ihrem anderen Ende eine Klemmbacke 24 aufweisen, die eine in die röhrenartige Leitung 2 eingreifende Klemmkante 25 ausbildet. Vorzugsweise sind der Verbindungsring 22, die Zungen 23 und die Klemmbacken 24 einstückig ausgebildet.

Im unverfomten Zustand entspricht der Abstand der Klemmkanten 25 dem Innendurchmesser der Aufnahme 4 bzw. dem Außendurchmesser der röhrenartigen Leitung 2. Die beim Drehen der Drehhülse 16 gegenüber dem Anschlussstück 3 und der sich dabei aufgrund der Zusammenwirkung des Außengewindes 18 mit dem Innengewinde 17 sich ergebende axiale Bewegung der Drehhülse 16, die über eine auf ihrer Innenseite ausgebildete ringförmige Schulter 26 auch auf die Klemmbacke 24 und damit die Klemmmittel übertragen wird, wird durch das Zusammenwirken des auf der Außenseite durch die Klemmbacken gebildeten Außenkonus 27 mit einem von dem Anschlussstück 3 endseitig gebildeten Innenkonus 28 in eine Radialbewegung der Klemmmittel und insbesondere der Klemmbacke 24 umgelenkt. Dadurch wird ein Klemmen der röhrenartigen Leitung 2 und bei weiterer Drehbewegung der Drehhülse 16 ein axiales Verschieben der röhrenartigen Leitung 2 bis zum Anpressen der Stirnfläche 5 an die Anlage 6 bewirkt. Für die Drehbewegung bzw. Axialbewegung der Drehhülse 16 ist beim verbindenden Betätigen durch eine endseitige Stirnfläche des Anschlussstücks 3 ein Anschlag gebildet, an den die Schulter 26 in Anlage bringbar ist, wie dies in der unteren Bildhälfte dargestellt ist. Beim Lösen der Betätigungseinrichtung ist durch den das Außengewinde 18 tragenden Abschnitt des Anschlussstücks 3 ein Anschlag gebildet, an dem der umgebördelte Endabschnitt 19 der Drehhülse 16 in Anlage bringbar ist.

Insbesondere durch das Anpressen der Stirnfläche 5 aufgrund des Nachschiebens der röhrenartigen Leitung 2 durch die klemmend eingreifenden Klemmbacken 24 wird eine dauerhaft und auch unter Wirkung des Systemdrucks aufrechterhaltene spaltfreie und damit totraumfreie Verbindung zwischen der röhrenartigen Leitung 2 und dem Anschlussstück 3 gewährleistet. Bei entsprechenden Werkstoffen der röhrenartigen Leitung 2, beispielsweise Polytetrafluorethylen (PTFE), ist der konische Abschnitt 13 mit relativ kurzer axialer Erstreckung und einem Konuswinkel von etwa 5° sowie die entsprechende Neigung der Anlage 6 von besonderem Vorteil, da durch ein eventuell auftretendes Wegfließen des Werkstoffes die Dichtwirkung zusätzlich erhöht ist. Dadurch ist kein separates Dichtungsmittel wie beispielsweise ein einzulegender Dichtring erforderlich. Hierdurch vereinfacht sich nicht nur die Montage, sondern auch die Herstellungs- und Betriebskosten sind deutlich reduziert, da derartige separate Dichtmittel aufgrund der bei bestimmten Anwendungen hohen Anforderungen an die Widerstandsfähigkeit des Werkstoffes des Dichtmittels kostenträchtig sind.

## Patentansprüche

1. System aufweisend eine mindestens teilweise elastisch verformbare röhrenartige Leitung (2) und eine Vorrichtung zum Verbinden mit einem Ende der Leitung (2), insbesondere Schlauch-Schnellverbinder (1), mit einem eine Aufnahme (4) mit einem zylindrischen Abschnitt (12) für die röhrenartige Leitung (2) und eine Anlage (6) für eine Stirnfläche (5) des Endes der röhrenartigen Leitung (2) aufweisenden Anschlussstück (3) und einer Klemmmittel zum Klemmen der röhrenartigen Leitung (2) aufweisenden Betätigungseinrichtung, die beim verbindenden Betätigen gegenüber dem Anschlussstück (3) bewegbar ist, wobei das Klemmmittel kreisumfänglich in Bezug auf die Längsachse (8) angeordnete und axial ausgerichtete Zungen (23) mit Klemmbacken (24) aufweist, die in radialer Richtung federnd auslenkbar sind, **dadurch gekennzeichnet, dass** zwischen der Anlage (6) und dem zylindrischen Abschnitt (12) die Aufnahme (4) einen konischen Abschnitt (13) aufweist, dass die röhrenartige Leitung (2) beim verbindenden Betätigen axial in Richtung auf das Anschlussstück (3) zu bewegbar ist entlang dem konischen Abschnitt (13), und dass durch die axiale Bewegung die Stirnfläche (5) des Endes der röhrenartigen Leitung (2) aufgrund einer elastischen Verformung dicht und totraumfrei an die Anlage (6) des Anschlussstücks (3) bringbar und im verbundenen Zustand mit dichtender axialer Vorspannung gehalten ist.

2. System nach Anspruch 1, **dadurch gekennzeichnet, dass** die Aufnahme (4) in Richtung auf das der röhrenartigen Leitung (2) abgewandte Ende unter Bildung der Anlage (6) in einen Durchtrittskanal (7) übergeht, und dass die Anlage (6) in ihrer radialen Ausdehnung an die röhrenartige Leitung (2) derart angepasst ist, dass im verbundenen Zustand der Übergang zwischen einer Innenfläche (9) der röhrenartigen Leitung (2) und dem Anschlussstück (3) absatzfrei ist.

3. System nach Anspruch 2, **dadurch gekennzeichnet, dass** der Übergang zwischen der Anlage (6) und dem Durchtrittskanal (7) einen weiteren konischen Abschnitt (15) aufweist.

4. System nach einem der Ansprüche 1 bis 3, **dadurch gekennzeichnet, dass** sich an den zylindrischen Abschnitt (12) der Aufnahme (4) ein nach innen vorspringender ringförmiger Steg (10) anschließt, an den eine Außenfläche (11) der röhrenartigen Leitung (2) in dichtende Anlage bringbar ist.

5. System nach einem der Ansprüche 1 bis 4, **dadurch gekennzeichnet, dass** die Anlage (6) für die Stirnfläche (5) durch eine ringförmige Schulter gebildet ist.

6. System nach einem der Ansprüche 1 bis 5, **dadurch gekennzeichnet, dass** der Konuswinkel des konischen Abschnitts (13) zwischen 1 und 10° beträgt, insbesondere etwa 5°.

7. System nach einem der Ansprüche 1 bis 6, **dadurch gekennzeichnet, dass** die Betätigungseinrichtung eine Drehhülse (16) aufweist, die mittels eines zweigängigen Gewindes (17) mit dem Anschlussstück (3) verschraubbar ist.

8. System nach Anspruch 7, **dadurch gekennzeichnet, dass** die Drehhülse (16) auf ihrer Innenseite eine ringförmige Schulter (26) zum Erfassen des Klemmmittels aufweist.

9. System nach einem der Ansprüche 1 bis 8, **dadurch gekennzeichnet, dass** die Zungen (23) jeweils an einem Ende über einen Verbindungsring (22) miteinander verbunden sind und jeweils an ihrem anderen Ende eine Klemmbacke (24) aufweisen, die eine in die röhrenartige Leitung (2) eingreifende Klemmkante (25) ausbildet.

10. System nach Anspruch 9, **dadurch gekennzeichnet, dass** die Außenseite des durch die Klemmbacke (24) gebildeten Endes der Klemmmittel die Form eines Außenkonus (27) hat, der beim verbindenden Betätigen mit einem von dem Anschlussstück (3) ausgebildeten Innenkonus (28) zusammenwirkt.

## Claims

1. System incorporating an at least partially elastically deformable tubular line (2) and a means for connecting with one end of the line (2), especially a quick hose connector (1) with a cylindrical section (12) incorporating a take-up (4) for the tubular line (2), and a connecting piece (3) incorporating an abutment (6) for a facing side (5) of the end of the tubular line (2), and an activating means incorporating a clamping means for clamping the tubular line (2), which is movable during the connecting activity opposite the connecting piece (3), whereby the clamping means incorporates axially aligned tabs (23) with clamping cheeks (24) positioned circumferentially relative to the longitudinal axis (8), the same being elastically displaceable in a radial direction, **characterised in that** the take-up (4) incorporates a conical section (13) between the abutment (6) and the cylindrical section (12), **in that** the tubular line (2) is axially moveable along the conical section (13) in the direction of the connecting piece (3) during the connecting activity, and that due to the axial movement of the facing side (5) of the end the tubular line (2) can be brought against the abutment (6) of the connecting piece (3) completely tight and gap-free thanks to an elastic deformation, and is held in the connected condition with a sealing axial pre-tension.

2. System according to Claim 1, **characterised in that** the take-up (4) changes into a passage channel (7) in the direction of the end facing away from the tubular line (2) whilst forming the abutment (6), and **in that** the abutment (6) is adjusted in its radial expansion to suit the tubular line (2) in such a way that the transition between an inner surface (9) of the tubular line (2) and the connecting piece (3) is step-free in the connected condition.

3. System according to Claim 2, **characterised in that** the transition between the abutment (6) and the passage channel (7) incorporates a further conical section (15).

4. System according to one of the Claims 1 to 3, **characterised in that** an annular bridge (10) projecting towards the inside follows the cylindrical section (12) of the take-up (4) against which an outer surface (11) of the tubular line (2) can be brought into sealing abutment.

5. System according to one of the Claims 1 to 4, **characterised in that** the abutment (6) for the facing side (5) is formed by an annular shoulder.

6. System according to one of the Claims 1 to 5, **characterised in that** the conical angle of the conical section (13) lies between 1 and 10°, especially approximately 5°.

7. System according to one of the Claims 1 to 6, **characterised in that** the activating means incorporates a rotating sleeve (16) which can be screwed into the connecting piece (3) by means of a twin-stepped thread (17).

8. System according to Claim 7, **characterised in that** the rotating sleeve (16) incorporates an annular shoulder (26) on its inside for engaging the clamping means.

9. System according to one of the Claims 1 to 8, **characterised in that** the tabs (23) are connected with one another at one end via a connecting ring (22), and that the same incorporate a clamping cheek (24) at their other end which form a clamping edge (25) engaging the tubular line (2).

10. System according to Claim 9, **characterised in that** the outside of the end of the clamping means formed by the clamping cheek (24) takes the form of an external cone (27) which co-operates with an internal cone (28) formed by the connecting piece (3) during the connecting activity.

## Revendications

1. Système qui comporte une conduite tubulaire (2) déformable élastiquement au moins partiellement et un dispositif à relier à une extrémité de la conduite (2), notamment raccord rapide (1) de tuyau, comprenant une pièce de raccordement (3) qui présente un logement de réception (4) avec un tronçon cylindrique (12) pour la conduite tubulaire (2) et avec un appui (6) pour une surface frontale (5) de l'extrémité de la conduite tubulaire, et un dispositif d'actionnement qui présente des moyens de serrage pour serrer la conduite tubulaire (2), et qui, lors de l'actionnement pour le raccordement est mobile par rapport à la pièce de raccordement (3), le moyen de serrage présentant des languettes (23) qui sont orientées axialement et sont disposées de manière périphérique circulaire relativement à l'axe longitudinal (8), et portent des mors de serrage (24) pouvant être déviés élastiquement dans la direction radiale, **caractérisé en ce qu'**entre l'appui (6) et le tronçon cylindrique (12), le logement de réception (4) présente un tronçon conique (13), **en ce que** la conduite tubulaire (2), lors de l'actionnement pour le raccordement, peut être déplacée axialement en direction de la pièce de raccordement (3) le long du tronçon conique (13), et **en ce que** par le mouvement de déplacement axial, la surface frontale (5) de l'extrémité de la conduite tubulaire (2), en raison d'une déformation élastique, peut être amenée de manière étanche et sans espaces morts sur l'appui (6) de la pièce de raccordement (3), et y être maintenue dans l'état relié ou raccordé avec une précontrainte axiale produisant une étanchéité.

2. Système selon la revendication 1, **caractérisé en ce que** le logement de réception (4), en direction de l'extrémité éloignée de la conduite tubulaire (2) et en formant l'appui (6), se transforme en un canal de passage (7), et **en ce que** l'appui (6), quant à son étendue radiale, est adaptée à la conduite tubulaire (2) de façon telle que dans l'état raccordé, la transition entre une surface intérieure (9) de la conduite tubulaire (2) et la pièce de raccordement (3) se fasse sans gradin ou décrochement.

3. Système selon la revendication 2, **caractérisé en ce que** la transition entre l'appui (6) et le canal de passage (7) présente un autre tronçon conique (15).

4. Système selon l'une des revendications 1 à 3, **caractérisé en ce qu'**au tronçon cylindrique (12) du logement de réception (4) se raccorde une nervure (10) de forme annulaire faisant saillie vers l'intérieur et contre laquelle peut être amenée en appui étanche une surface extérieure (11) de la conduite tubulaire (2).

5. Système selon l'une des revendications 1 à 4, **caractérisé en ce que** l'appui (6) pour la surface frontale (5) est formé par un épaulement de forme annulaire.

6. Système selon l'une des revendications 1 à 5, **caractérisé en ce que** l'angle de cône du tronçon conique (13) se situe entre 1 et 10°, et vaut notamment environ 5°.

7. Système selon l'une des revendications 1 à 6, **caractérisé en ce que** le dispositif d'actionnement comprend un manchon rotatif (16) qui peut être vissé sur la pièce de raccordement (3) au moyen d'un filetage (17) à filet double.

8. Système selon la revendication 7, **caractérisé en ce que** le manchon rotatif (16) présente sur son côté intérieur, un épaulement (26) de forme annulaire, destiné à intercepter le moyen de serrage.

9. Système selon l'une des revendications 1 à 8, **caractérisé en ce que** les languettes (23) sont reliées mutuellement chacune par une extrémité respective, à l'aide d'un anneau de liaison (22), et présentent chacune à son autre extrémité, un mors de serrage (24) qui forme une arête de serrage (25) s'engageant dans la conduite tubulaire (2).

10. Système selon la revendication 9, **caractérisé en ce que** le côté extérieur de l'extrémité des moyens de serrage, formée par le mors de serrage (24), présente la forme d'un cône extérieur (27), qui lors de l'actionnement pour le raccordement coopère avec un cône intérieur (28) formé par la pièce de raccordement (3).
